# EUROPEAN PATENT APPLICATION

(11) **EP 4 333 395 A1**
(43) Date of publication of application: **06.03.2024**
(21) Application number: 22889297.2
(22) Date of filing: 02.11.2022
(51) Int. Cl.: H04L 45/28, H04L 45/247

(54) **MESSAGE TRANSMISSION METHOD AND APPARATUS, AND DEVICE**

(30) Priority: 03.11.2021 CN 202111296943
(71) Applicant: Huawei Technologies Co., Ltd., Longgang Shenzhen, Guangdong 518129 (CN)
(72) Inventor: ZHU, Xiaolei, Shenzhen, Guangdong 518129 (CN)
(74) Representative: Goddar, Heinz J.
(86) International application number: PCT/CN2022/129133
(87) International publication number: WO 2023/078275

(57) **Abstract**

This application discloses a packet transmission method and apparatus, and a device. After receiving a first packet, a first service chain forwarding device performs policy routing matching. When a first policy is found for the first packet, the first service chain forwarding device obtains a first redirection address corresponding to the first policy, and determines a first route set based on the first redirection address. The first route set includes a first primary route and a first backup route. A next hop of the first primary route is a first device, and a next hop of the first backup route is a second device. The first service chain forwarding device forwards the first packet to the first device when the first primary route works normally. The first service chain forwarding device sends the first packet to the second device when the first primary route is faulty. In this application, the primary and backup routes corresponding to the first redirection address are generated in advance. When the first primary route is faulty, the first packet is directly sent to the second device through the first backup route, and bypass is performed without relying on refreshing the route by a control plane. This can improve a fault convergence speed of a service chain.

## Description

This application claims priority to Chinese Patent Application No. 202111296943.X, filed on November 3, 2021 and entitled "PACKET TRANSMISSION METHOD AND APPARATUS, AND DEVICE", which is incorporated herein by reference in its entirety.

### TECHNICAL FIELD

This application relates to the field of communication technologies, and in particular, to a packet transmission method and apparatus, and a device.

### BACKGROUND

With development of network functions virtualization (network functions virtualization, NFV) technologies, a network function is decoupled from hardware, and forwarding is separated from control, to enable network control of a data center more elastic and flexible. In an NFV network, a service function chain (service function chain, SFC) plays a critical role in forwarding traffic to complete a network service in a specified sequence. When the service needs to be adjusted, only a sequence of service function nodes on the service function chain SFC needs to be updated without changing network configurations. In this way, the network service can be quickly provisioned. The service function chain is briefly referred to as a service chain.

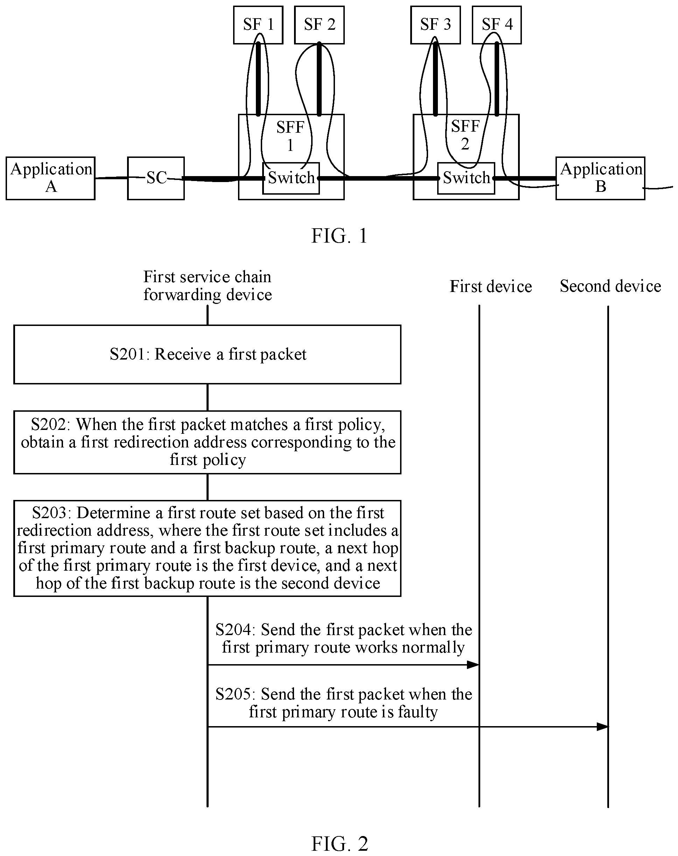

A network device plays different roles in an entire service chain system based on different use functions. A role of the service chain mainly includes a service classifier (service classifier, SC), located at a border ingress in an SFC domain, and configured to: perform traffic classification on a packet, set a service identifier, and encapsulate a service packet header. The service function (Service Function, SF) node is a device that provides a value-added service, including a firewall, a load balancing device, and the like. A service function forwarder (Service Function Forwarder, SFF) node is a device connected to the SF, can identify service flow information, and forward a service flow based on the service flow information. One SFC may include a plurality of different SF nodes, and the different SF nodes may be connected to a same SFF or different SFFs. In a diagram of a service chain application scenario shown in FIG. 1, one SFC path includes an SF 1, an SF 2, an SF 3, and an SF 4, where the SF 1 and the SF 2 are connected to an SFF 1, and the SF 3 and the SF 4 are connected to an SFF 2. As shown in FIG. 1, traffic of an application A is classified when the traffic reaches an SC node. The classified traffic is redirected to an SFC service chain, and the traffic is redirected to a corresponding SF node based on the SFC service chain for packet processing and forwarding.

If an SF node or a link in the SFC that is passed through is faulty, a service is interrupted. To ensure service connectivity, the faulty SF node or the faulty link may be usually chosen to skip, to continue redirection to a next-hop SF node. For example, when the SF 1 node in FIG. 1 is faulty, a next hop of the SFF 1 is redirected to the SF 2 node, and the SF 1 node is no longer passed through. In this case, when the SF 1 node is faulty, a corresponding bypass (bypass) path is the SF 2 -> the SF 3 -> the SF 4. However, in the foregoing process, traffic can be switched to the bypass path only after the SFF device detects that a locally accessed SF node is faulty, updates a route through a control plane, and updates a forwarding entry to a forwarding plane, resulting in a slow fault convergence speed and affecting traffic forwarding.

### SUMMARY

This application provides a packet processing method and apparatus, and a device, to implement fast traffic switching when a node or a link is faulty, and improve bypass performance.

According to a first aspect of this application, a packet transmission method is provided. The method may include: When a first service chain forwarding device receives a to-be-forwarded first packet, the first service chain forwarding device performs policy matching on the first packet. When the first packet matches a first policy, the first service chain forwarding device obtains a first redirection address corresponding to the first policy, and determines a first route set based on the first redirection address. The first route set includes a first primary route and a second backup route, a next hop of the first primary route is a first device, and a next hop of the first backup route is a second device. When the first primary route works normally, the first service chain forwarding device preferentially sends the first packet to the first device by using the first primary route. When the first primary route is faulty, the first service chain forwarding device directly sends the first packet to the second device through the first backup route. In this application, bypass is performed after a service chain is faulty without waiting for refreshing the route by a control plane. This can improve a fault convergence speed and packet forwarding performance.

The first service chain forwarding device may determine, in the following manner, that the first primary route is faulty: The first service chain forwarding device determines, based on state information of an outbound interface connected to the first service chain forwarding device and the first device, that the first primary route is faulty. To be specific, the first service chain forwarding device may store the state information of the outbound interface connected to the first service chain forwarding device and the first device. When the first packet needs to be forwarded, the first service chain forwarding device may determine, based on the state information of the outbound interface, whether the first primary route for reaching the first device is available, so that when the first primary route is unavailable, the first service chain forwarding device forwards the first packet through the first backup route, to improve packet transmission efficiency.

In a specific implementation, a bidirectional forwarding detection BFD mechanism may be configured on the first service chain forwarding device, to detect, by using the BFD, connectivity from the first service chain forwarding device to the first device, to obtain a detection result. The first service chain forwarding device updates the state information of the outbound interface based on the detection result. For example, when it is detected, by using the BFD, that the first primary route between the first service chain forwarding device and the first device is faulty, the first service chain forwarding device sets a status of the outbound interface to down. If it is detected, by using the BFD, that the first primary route between the first service chain forwarding device and the first device is reachable, the first service chain forwarding device sets the status of the outbound interface to up. The first service chain forwarding device is connected to the first device through the outbound interface.

In a specific implementation, the first service chain forwarding device may determine the first route set in the following manner. Specifically, the first service chain forwarding device searches a routing table by using the first redirection address as a destination address, to obtain the first route set. To be specific, the first service chain forwarding device may obtain, by searching the routing table, the two routes (the first primary route and the first backup route) for reaching the first redirection address, to improve working efficiency. The first route set may be a preconfigured static route.

In a specific implementation, the first device and the second device each may be a service function device, and the first device and the second device may be connected to a same service chain forwarding device, that is, the first service chain forwarding device. Alternatively, the first device is connected to the first service chain forwarding device, and the second device is connected to a second service chain forwarding device.

When the second device is also connected to the first service chain forwarding device, after the first service chain forwarding device sends the first packet to the first device, the first service chain forwarding device receives a second packet sent by the first device, where the second packet is obtained by the first device based on the first packet. Then, the first service chain forwarding device performs policy matching on the second packet, and when the second packet matches a second policy, the first service chain forwarding device obtains a second redirection address corresponding to the second policy. The first service chain forwarding device determines a second route set based on the second redirection address, where the second route set includes a second primary route and a second backup route. A next hop of the second primary route is the second device, and a next hop of the second backup route is a third device. The first service chain forwarding device sends the second packet to the second device when the second primary route works normally. The first service chain forwarding device sends the second packet to the third device when the second primary route is faulty.

When the second device is connected to the second service chain forwarding device and the first primary route is faulty, the first service chain forwarding device sends the first packet to the second service chain forwarding device.

In a specific implementation, when the first device is a last hop of a service chain, the second device is a destination network device corresponding to a destination address in the first packet. The next hop of the first backup route is a loopback interface of the second device.

According to a second aspect of this application, a packet transmission apparatus is provided, and applied to a first service chain forwarding device. The apparatus may include: a receiving unit, configured to receive a first packet; an obtaining unit, configured to: when the first packet matches a first policy, obtain a first redirection address corresponding to the first policy; a determining unit, configured to determine a first route set based on the first redirection address, where the first route set includes a first primary route and a first backup route, a next hop of the first primary route is a first device, and a next hop of the first backup route is a second device; and a sending unit, configured to: send the first packet to the first device when the first primary route works normally, or send the first packet to the second device when the first primary route is faulty.

In a specific implementation, the determining unit is further configured to determine, based on state information of an outbound interface connected to the first service chain forwarding device and the first device, that the first primary route is faulty.

In a specific implementation, the apparatus further includes an updating unit. The obtaining unit is further configured to detect connectivity from the first service chain forwarding device to the first device by using a bidirectional forwarding detection mechanism, to obtain a detection result. The updating unit is configured to update the state information of the outbound interface based on the detection result.

In a specific implementation, the determining unit is specifically configured to search a routing table by using the first redirection address as a destination address, to obtain the first route set.

In a specific implementation, the first route set is preconfigured.

In a specific implementation, the first device and the second device each are a service function device, and both the first device and the second device are connected to the first service chain forwarding device.

In a specific implementation, the receiving unit is further configured to receive a second packet sent by the first device, where the second packet is obtained by the first device based on the first packet; the obtaining unit is further configured to: when the second packet matches a second policy, obtain a second redirection address corresponding to the second policy; the determining unit is further configured to determine a second route set based on the second redirection address, where the second route set includes a second primary route and a second backup route, a next hop of the second primary route is the second device, and a next hop of the second backup route is a third device; and the sending unit is further configured to: send the second packet to the second device when the second primary route works normally, or send the second packet to the third device when the second primary route is faulty.

In a specific implementation, the second device is a service function device, the first device is connected to the first service chain forwarding device, and the second device is connected to a second service chain forwarding device.

In a specific implementation, the sending unit is further configured to send the first packet to the second service chain forwarding device.

In a specific implementation, when the first device is a last hop of a service chain, the second device is a destination network device corresponding to a destination address in the first packet.

In a specific implementation, the next hop of the first backup route is a loopback interface of the second device.

According to a third aspect of this application, a communication device is provided, where the device includes a processor and a memory.

The memory is configured to store instructions or a computer program.

The processor is configured to execute the instructions or the computer program in the memory, to enable the communication device to perform the method according to the first aspect.

According to a fourth aspect of this application, a computer-readable storage medium is provided, including instructions. When the instructions are run on a computer, the computer is enabled to perform the method according to the first aspect.

According to a technical solution provided in this application, after receiving the first packet, the first service chain forwarding device performs policy routing matching. When the first policy is found for the first packet, the first service chain forwarding device obtains the first redirection address corresponding to the first policy. The first service chain forwarding device determines the first route set based on the first redirection address. The first route set includes the first primary route and the first backup route. The next hop of the first primary route is the first device, and the next hop of the first backup route is the second device. The first service chain forwarding device forwards the first packet to the first device when the first primary route works normally. The first service chain forwarding device sends the first packet to the second device when the first primary route is faulty. To be specific, in this application, the primary and backup routes corresponding to the first redirection address are pre-generated. When the first primary route works normally, the first packet may be preferentially sent to the first device by using the first primary route. When the first primary route is faulty, the first packet is directly sent to the second device through the first backup route, and bypass is performed without relying on detecting a fault and updating the route by a control plane, to improve a fault convergence speed and service performance.

### BRIEF DESCRIPTION OF DRAWINGS

To describe the technical solutions in embodiments of this application or in a conventional technology more clearly, the following briefly describes the accompanying drawings for describing embodiments or the conventional technology. It is clear that the accompanying drawings in the following descriptions show merely some embodiments recorded in this application. Persons of ordinary skill in the art may still derive other drawings from these accompanying drawings without creative efforts.
FIG. 1 is a schematic diagram of a service chain application scenario;
FIG. 2 is a flowchart of a packet transmission method according to an embodiment of this application;
FIG. 3 is a schematic diagram of determining a first route set according to an embodiment of this application;
FIG. 4 is a schematic diagram of an application scenario according to an embodiment of this application;
FIG. 5 is a structural diagram of a packet transmission apparatus according to an embodiment of this application;
FIG. 6 is a structural diagram of a network device according to an embodiment of this application; and
FIG. 7 is a structural diagram of another network device according to an embodiment of this application.

### DESCRIPTION OF EMBODIMENTS

To make persons skilled in the art better understand solutions in the present invention, the following clearly and completely describes the technical solutions in embodiments of the present invention with reference to the accompanying drawings in embodiments of the present invention. It is clear that the described embodiments are merely some rather than all of embodiments of the present invention.

For ease of understanding of the technical solutions provided in embodiments of this application, the following describes technical terms in this application.

A service chain SFC is a collection of ordered service functions, performs a series of service processing on network traffic based on classification and a policy, and is an important method for performing on-demand and in-order service processing on the traffic in an NFV virtual network. In addition to a basic network switching device in a data center network, some value-added service devices such as a firewall, a load balancer, and an intrusion prevention device are deployed to ensure network security protection and service scheduling. To meet different service traffic requirements and reduce deployment and maintenance costs of the data center network, a user may use the service chain to set a network path for the traffic on demand.

Policy-based routing (policy-based routing, PBR) is a mechanism that forwards a packet according to a policy for which characteristic information of the packet is found, and is briefly referred to as policy routing. The PBR is applied at a data level. When there has been a routing table, the traffic is not forwarded based on the routing table, but another path is selected for the traffic based on specific requirements. In conventional routing table forwarding, a route can be selected only based on a destination address. The PBR may select a route based on traffic characteristics such as a source address, a target address, a source port, a target port, and a protocol. Further, the PBR is performed before the routing table, and only traffic that fails to match the PBR is forwarded based on the routing table. Specifically, after the PBR is enabled, when forwarding a data packet, a communication device first filters the packet according to a configured rule, and if matching succeeds, the communication device forwards the packet according to a found policy.

Fast reroute (fast reroute, FRR) means that when a physical layer or a link layer detects a fault, a fault message is reported to an upper-layer routing system, and a backup link is immediately enabled to forward the packet. IP fast reroute (Internet Protocol fast reroute, IP FRR) is a method for quickly implementing route backup. The IP FRR is designed for IP network routing, ensures that a forwarding system can quickly respond to a link fault and directly use a backup route to forward data to restore a service as soon as possible. Specific implementation is: When a primary link is available, forwarding information of the backup route is provided for a forwarding engine by setting an IP FRR policy. When the forwarding engine detects that the primary link is unavailable, the forwarding engine can directly use a backup path to forward the packet before route convergence on a control plane.

In a service chain application scenario, when detecting that a link of an SF node is faulty, an SFF node performs path switching only after the control plane detects the fault, performs a route update, and delivers a forwarding entry to a forwarding plane, and the PBR responds to next hop information of the route update. To be specific, a time for the SFF node to perform the path switching includes a local fault detection time, a local route update time, and a PBR next hop update time, resulting in a low fault convergence speed and affecting packet forwarding efficiency.

In view of this, embodiments of this application provide a packet transmission method, to improve a fault convergence speed when a fault occurs. Specifically, when receiving a first packet, a first service chain forwarding device performs policy matching. When the first packet matches a first policy, the first service chain forwarding device obtains a first redirection address corresponding to the first policy. After obtaining the first redirection address, the first service chain forwarding device determines primary and backup routes, that is, a first route set, based on the first redirection address, where the first route set includes a first primary route and a first backup route. Generally, the first service chain forwarding device sends the first packet to the first primary route, the first service chain forwarding device directly sends the first packet to the first backup route when the first primary route is faulty, and fault convergence can be implemented without waiting for updating the route by a control plane. This improves packet forwarding efficiency and improves bypass performance of a service chain.

Based on the foregoing descriptions, for ease of understanding of the technical solutions provided in embodiments of this application, the following describes a packet transmission method provided in embodiments of this application with reference to the accompanying drawings.

FIG. 2 is a flowchart of a packet transmission method according to an embodiment of this application. As shown in FIG. 2, the method includes steps S201 to S205.

S201: A first service chain forwarding device receives a first packet.

The first service chain forwarding device may receive the first packet sent by a service classifier SC. For example, in FIG. 1, an SFF 1 node receives the first packet sent by an SC node. Alternatively, the first service chain forwarding device receives the first packet sent by a service function SF device. For example, in FIG. 1, the SFF 1 node receives the first packet sent by an SF 1 node, or the SFF 1 node receives the first packet sent by an SF 2 node. Alternatively, the first service chain forwarding device receives the first packet sent by another service chain forwarding device. For example, in FIG. 1, the first service chain forwarding device is an SFF 2 node, and the SFF 2 node receives the first packet sent by the SFF 1 node.

S202: When the first packet matches a first policy, the first service chain forwarding device obtains a first redirection address corresponding to the first policy.

In this embodiment, as a service function forwarding device in a service chain, that is, the first service chain forwarding device, the first service chain forwarding device may receive the first packet sent by a previous-hop device. After receiving the first packet, the first service chain forwarding device performs policy matching based on the first packet and policy routing, and when the first policy is found, the first service chain forwarding device obtains the first redirection address corresponding to the first policy. To be specific, in this embodiment, the policy routing is implemented in a redirection manner, where the redirection means that forwarding is performed based on an action specified in the policy instead of being performed based on a destination address of the packet. The first redirection address may be an idle IP address (to be specific, an IP address that is not assigned to any device for use).

An access control list (access control list, ACL) rule may be preconfigured on the first service chain forwarding device, and the ACL rule is a policy configured on the first service chain forwarding device. After receiving the first packet, the first service chain forwarding device may match the ACL rule based on information such as a source IP address, a destination IP address, a source port number, and a source MAC address of the first packet. When finding a specific rule, the first packet is redirected. For example, a next hop of the first packet is specified as a device corresponding to the idle IP address (a redirection address) in the rule.

When the first packet fails to match any policy, service chain forwarding is not performed, but the first packet is forwarded based on a forwarding entry of a forwarding plane.

S203: The first service chain forwarding device determines a first route set based on the first redirection address.

After obtaining the first redirection address, the first service chain forwarding device determines the first route set based on the first redirection address. The first route set includes a first primary route and a first backup route. To be specific, IP FRR is pre-formed based on the first redirection address. After obtaining the first redirection address, the first service chain forwarding device may quickly find the pre-formed primary and backup routes based on the first redirection address. A next hop of the first primary route is a first device, and a next hop of the first backup route is a second device. The first device is a device that needs to be passed through currently, and the second device is a device used for fault bypass. In this application, for ease of description, a concept of the route set is proposed. This does not mean that a route set needs to be explicitly specified and an identifier needs to be configured for the route set. When a plurality of routes are found based on the first redirection address, and the plurality of routes include one primary route and at least one backup route, the plurality of routes are referred to as one route set.

The first device and the second device may be different types of devices. In one case, the first device and the second device each may be a service function SF node. Further, both the two SF nodes may be connected to the first service chain forwarding device. For example, the first service chain forwarding device is the SFF 1 node, the first device is the SF 1 node in FIG. 1, and the second device is the SF 2 node in FIG. 1. Alternatively, the two SF nodes may be respectively connected to different service chain forwarding devices. For example, the first device is connected to the first service chain forwarding device, and the second device is connected to a second service chain forwarding device. For example, refer to FIG. 1. The first service chain forwarding device is the SFF 1 node, the second service chain forwarding device is the SFF 2, the first device is the SF 2 node, and the second device is an SF 3 node. In another case, the first device is a service function SF node, and the second device is a non-service function SF node. Specifically, when the first device is a last hop of the service chain, the second device is a destination network device corresponding to the destination address in the first packet. Specifically, the next hop of the first backup route is a loopback interface loopback address of the second device. For example, the first service chain forwarding device is the SFF 2 node in FIG. 1, the first device is an SF 4, and the second device is an application device B.

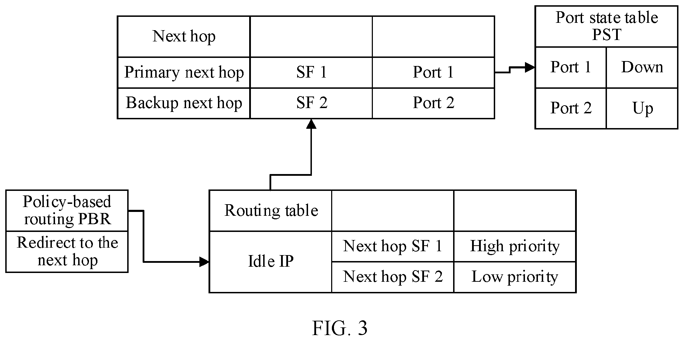

In a specific implementation, the first service chain forwarding device searches a routing table based on the first redirection address as the destination address, to obtain the first route set. To be specific, the first service chain forwarding device uses the first redirection address as the destination address, searches the routing table for two routes for reaching the destination address, uses a route with a higher priority as the first primary route, and uses a route with a lower priority as the first backup route. The first route set may be a preconfigured static route set. Refer to a schematic search diagram shown in FIG. 3. An SFF 1 first performs policy matching based on the first packet, and redirects to a next hop after the first policy is found, that is, obtains an idle IP, and searches the routing table based on the idle IP, to obtain a route corresponding to the idle IP. When a next hop is an SF 1, the route is a route with a high priority, and when a next hop is an SF 2, the route is a route with a low priority. The SFF 1 determines primary and backup next hops based on searched route information. The primary next hop is the SF 1, and a corresponding outbound interface is a port 1. The backup next hop is the SF 2, and a corresponding outbound interface is a port 2. Each outbound interface may further store a corresponding port state table (port state table, PST), and the PST may record whether a state of a port is faulty, for example, a state of the port 1 is faulty, and a state of the port 2 is normal. The outbound interface port 1 is an interface on the SFF 1, and the SFF 1 is connected to the SF 1 through the outbound interface port 1. The outbound interface port 2 is an interface on the SFF 1, and the SFF 1 is connected to the SF 2 through the outbound interface port 2.

It should be noted that, when a next-hop route is not found based on the first redirection address, the service chain forwarding is not performed, but the first packet is forwarded based on the forwarding entry of the forwarding plane.

S204: The first service chain forwarding device sends the first packet to the first device when the first primary route works normally.

S205: The first service chain forwarding device sends the first packet to the second device when the first primary route is faulty.

After the first route set is determined, when the first primary route works normally, the first service chain forwarding device forwards the first packet by using the first primary route, that is, sends the first packet to the first device. When the first primary route is faulty, the first backup route is directly started, and the first packet is sent to the second device.

The first service chain forwarding device may detect, by using a bidirectional forwarding detection (Bidirectional Forwarding Detection, BFD) mechanism, connectivity of reaching the first device, obtain a detection result, and update state information of the outbound interface based on the detection result. The outbound interface is an interface on the first service chain forwarding device, and the first service chain forwarding device is connected to the first device through the outbound interface. To be specific, the first service chain forwarding device may determine, based on the state information of the outbound interface connected to the first service chain forwarding device and the first device, whether the first primary route is faulty. Specifically, the BFD detection mechanism may be configured on the first service chain forwarding device, to detect, by using the BFD mechanism, connectivity from the first service chain forwarding device to the first device, and a state linkage of a PST port is enabled. When it is detected, by using the BFD, that the first primary route is faulty (down), the state corresponding to the outbound interface is updated to down. If the first service chain forwarding device determines, based on the state of the outbound interface, that the first primary route is faulty, the first service chain forwarding device directly switches to the first backup route, and forwards the first packet through the first backup route, to implement fast bypass. For example, in FIG. 1, the SFF 1 node detects, by configuring the BFD mechanism, connectivity of reaching the SF 1 node. When it is detected, by using the BFD, that the SFF 1 node and the SF 1 node are connected, the state of the outbound interface port 1 corresponding to the SFF 1 is updated to normal (up). The SFF 1 node forwards, to the SF 1 node, the received first packet sent by the SC. When the SFF 1 node is disconnected from the SF 1 node, the state of the outbound interface port 1 corresponding to the SFF 1 is updated to faulty (down), and when determining, based on the state corresponding to the outbound interface port 1, that the outbound interface is down, the SFF 1 forwards the received first packet to the SF 2 node.

It should be noted that, when the second device is a service function device, and the first device and the second device are connected to different service chain forwarding devices, for example, the first device is connected to the first service chain forwarding device, and the second device is connected to the second service chain forwarding device, that the first service chain forwarding device sends the first packet to the second device is: The first service chain forwarding device sends the first packet to the second service chain forwarding device. After receiving the first packet, the second service chain forwarding device may perform the operations of S201 to S205 to perform a redirection operation on the first packet.

It can be learned that when receiving the first packet, the first service chain forwarding device performs policy matching. When the first packet matches the first policy, the first service chain forwarding device obtains the first redirection address corresponding to the first policy. After obtaining the first redirection address, the first service chain forwarding device determines the first route set based on the first redirection address, where the first route set includes the first primary route and the first backup route. Generally, the first service chain forwarding device sends the first packet to the first primary route, the first service chain forwarding device directly sends the first packet to the first backup route when the first primary route is faulty, and fault convergence can be implemented without waiting for updating the route by a control plane. This improves packet forwarding efficiency and improves bypass performance of the service chain.

In an application scenario, when the first device and the second device each are a service function SF device and both are connected to the first service chain forwarding device, after sending the first packet to the first device, the first service chain forwarding device receives a second packet sent by the first device, and performs a redirection operation on the second packet. The second packet is obtained by the first device based on the first packet. For example, in FIG. 1, after receiving the first packet sent by the SC node, the SFF 1 node obtains the first redirection address, and determines, based on the first redirection address, that the next hop of the first primary route is the SF 1 node and the next hop of the first backup route is the SF 2 node. When the first primary route works normally, the SFF 1 node sends the first packet to the SF 1 node. After processing the first packet, the SF 1 node forms the second packet, and forwards the second packet to the SFF 1, and the SFF 1 performs a redirection operation again. Specifically:
(1) When the second packet matches a second policy, the first service chain forwarding device obtains a second redirection address corresponding to the second policy.
   In this embodiment, the first service chain forwarding device performs policy matching after receiving the second packet, and when the second policy is found, the first service chain forwarding device obtains the second redirection address corresponding to the second policy. For specific implementation of performing policy matching by the first service chain based on the second packet, refer to related descriptions of S201 in the foregoing method embodiment.
(2) The first service chain forwarding device determines a second route set based on the second redirection address.

After obtaining the second redirection address, the first service chain forwarding device determines the second route set based on the second redirection address. The second route set includes a second primary route and a second backup route, a next hop of the second primary route is the second device, and a next hop of the second backup route is a third device. The second route set is pre-formed based on the second redirection address.

The second device and the third device may be different types of devices. In one case, the second device and the third device each may be a service function SF node. Further, both the two SF nodes may be connected to the first service chain forwarding device or the two SF nodes may be respectively connected to different service chain forwarding devices. In another case, the second device is a service function SF node, and the third device is a non-service function SF node. Specifically, when the second device is a last hop of the service chain, the third device is a destination network device corresponding to the destination address in the first packet. Specifically, the next hop of the second backup route is a loopback interface loopback address of the third device. Specifically, for specific forms of the second device and the third device, refer to related descriptions of the first device and the second device in the foregoing method embodiment.

Specifically, the first service chain forwarding device uses the second redirection address as the destination address, searches the routing table for two routes for reaching the destination address, uses a route with a higher priority as the second primary route, and uses a route with a lower priority as the second backup route. The second route set may be a preconfigured static route set.

(3) The first service chain forwarding device sends the second packet to the second device when the second primary route works normally.

(4) The first service chain forwarding device sends the second packet to the third device when the second primary route is faulty.

After the second route set is determined, when the second primary route works normally, the first service chain forwarding device forwards the second packet by using the second primary route, that is, sends the second packet to the second device. When the second primary route is faulty, the second backup route is directly started, and the first packet is sent to the third device.

The first service chain forwarding device may detect, by using the bidirectional detection mechanism BFD, connectivity from the first service chain forwarding device to the second device, obtain a detection result, and update, based on the detection result, state information of the outbound interface connected to the second device. The outbound interface is an interface on the first service chain forwarding device, and the first service chain forwarding device is connected to the second device through the outbound interface. To be specific, the first service chain forwarding device may determine, based on the state information of the outbound interface connected to the first service chain forwarding device and the second device, whether the second primary route is faulty. Specifically, the BFD mechanism may be configured on the first service chain forwarding device, to detect connectivity to the second device, and a state linkage of the PST port is enabled. When it is detected, by using the BFD, that the second primary route is faulty (down), the state corresponding to the outbound interface is updated to down. If the first service chain forwarding device determines, based on the state of the outbound interface, that the second primary route is faulty, the first service chain forwarding device directly switches to the second backup route, and forwards the second packet through the second backup route, to implement fast bypass.

To reflect continuity of packet (such as the first packet and the second packet mentioned above) transmission, in this embodiment of this application, both the first packet received by the first service chain forwarding device and the first packet sent by the first service chain forwarding device to the first device are referred to as the first packet. However, it may be understood that, the first packet received by the first service chain forwarding device is different from the first packet sent by the first service chain forwarding device to the first device in an actual application scenario. For example, information such as a time to live (time to live, TTL) and a next-hop node may be different. To be specific, when the first service chain forwarding device forwards the received first packet to the first device, the first packet is actually an updated first packet in which some necessary information is modified. The first packet received by the first service chain forwarding device and the updated first packet sent by the first service chain forwarding device to the first device may carry a same payload (payload), same attribute information, and a same destination address.

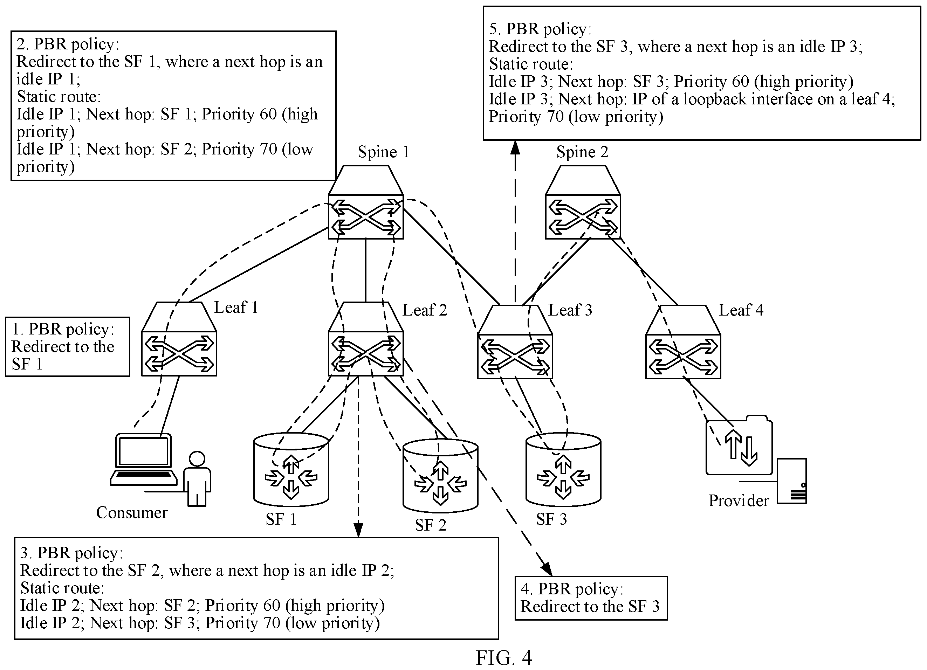

For ease of understanding of this embodiment of this application, refer to a schematic diagram of an application scenario shown in FIG. 4. In this application scenario, an example in which traffic from a consumer to a provider is sequentially redirected to an SF 1, an SF 2, and an SF 3 is used for description. The consumer is connected to a leaf 1, the provider is connected to a leaf 4, the SF 1 and the SF 2 are connected to a leaf 2, and the SF 3 is connected to a leaf 3. The leaf 1 and the leaf 4 are the service classifier SC, and the leaf 2 and the leaf 3 are the service function forwarding SFF node. A dotted line in FIG. 4 represents a packet transmission path, and a specific operation is as follows:
(1) Consumer-side traffic is forwarded to the leaf 1. After receiving the traffic, the leaf 1 implements a PBR traffic diversion policy: The traffic is matched to perform SFC forwarding. An action is to redirect to the SF 1, and the traffic is forwarded to the leaf 2 through a remote spine 1.
(2) After receiving the traffic, the leaf 2 implements the PBR traffic diversion policy: The traffic is matched to perform the SFC forwarding. A next hop is redirected to an idle IP 1 corresponding to the SF 1, and the idle IP 1 is used to determine primary and backup routes for FRR. A next hop of the primary route is the SF 1, and a next hop of the backup route is the SF 2. To accelerate fault detection, connectivity to the SF 1 is detected by using BFD 1 configured on the leaf 2, and a state linkage of a PST port is enabled. When there is no fault, the traffic is forwarded by using the primary route and redirected to the SF 1. When there is a fault, it is detected, by using the BFD 1, that the outbound interface is faulty (down). The state of the outbound interface connected to the SF 1 is updated. After determining that the state of the outbound interface of the primary route is down on a forwarding plane, the leaf 2 directly performs switching to a backup path, that is, performs forwarding to the SF 2 for bypass.
(3) After passing through the SF 1, the traffic is forwarded to the leaf 2 again. The leaf 2 implements the PBR traffic diversion policy again: The traffic is matched to perform the SFC forwarding. A next hop is redirected to an idle IP 2 corresponding to the SF 2, and the idle IP 2 is used to determine primary and backup routes for the FRR. The next hop of the primary route is the SF 2, and the next hop of the backup route is the SF 3. To accelerate fault detection, connectivity to the SF 2 is detected by using BFD 2 configured on the leaf 2, and the state linkage of the PST port is enabled. When the primary route is not faulty, the traffic is forwarded by using the primary route and redirected to the SF 2. When the primary route is faulty, the state of the outbound interface connected to the SF 2 is updated based on a primary route fault and the BFD 2. After determining that the state of outbound interface of the primary route is down on the forwarding plane, the leaf 2 directly performs switching to the backup path, that is, performs forwarding to the SF 3 for bypass (where forwarding to the leaf 3 needs to be performed through the spine 2).
(4) After passing through the SF 2, the traffic is forwarded to the leaf 2 again. The leaf 2 implements the PBR traffic diversion policy again. The traffic is matched to perform the SFC forwarding. A next hop is redirected to the SF 3. The SF 3 is connected on a remote leaf 3 device. Therefore, the primary and backup routes for the FRR are not needed for fast bypass. When the SF 3 is faulty, the traffic is forwarded to the leaf 3 device and then bypass is performed.
(5) After receiving the traffic, the leaf 3 implements the PBR traffic diversion policy. The traffic is matched to perform the SFC forwarding. A next hop is redirected to an idle IP 3 corresponding to the SF 3, and the idle IP 3 is used to determine the primary and backup routes for the FRR. The next hop of the primary route is the SF 3. The next hop of the backup route is an IP of a loopback interface on the leaf 4 (where the SF 3 is a last hop of the SFC, and when there is a fault, forwarding to the leaf 4 accessed by the provider is performed through a normal layer 2 and a normal layer 3.) To accelerate fault detection, connectivity to the SF 3 is detected by using BFD 3 configured on the leaf 3, and the state linkage of the PST port is enabled. When the primary route is not faulty, the traffic is forwarded by using the primary route and redirected to the SF 3. When the primary route is faulty, the state of the outbound interface connected to the SF 3 is updated based on the primary route fault and the BFD 3. After determining that the outbound interface of the primary route is down on the forwarding plane, the leaf 3 directly performs switching to the backup path, that is, performs forwarding to the leaf 4 for bypass.

Based on the foregoing method embodiment, an embodiment of this application provides a packet transmission apparatus. The following describes the apparatus with reference to the accompanying drawings.

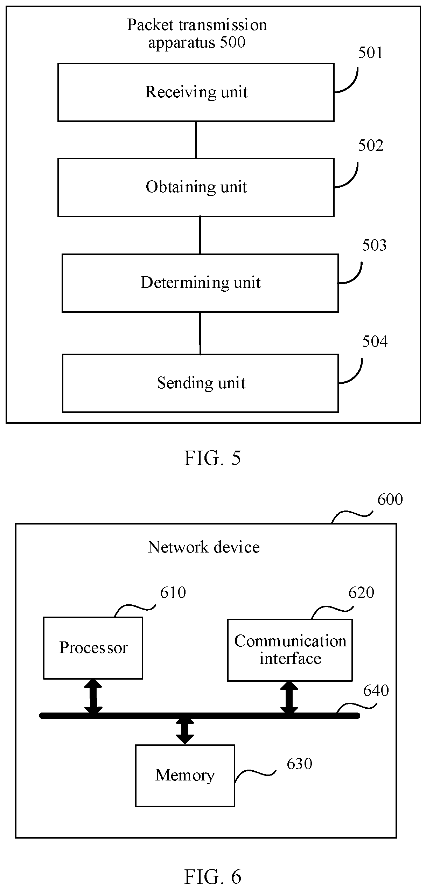

FIG. 5 is a structural diagram of a packet transmission apparatus according to an embodiment of this application. The apparatus is applied to a first service chain forwarding device, and can implement a function of the first service chain forwarding device in the foregoing method embodiment. The apparatus 500 may include a receiving unit 501, an obtaining unit 502, a determining unit 503, and a sending unit 504.

The receiving unit 501 is configured to receive a first packet.

The obtaining unit 502 is configured to: when the first packet matches a first policy, obtain a first redirection address corresponding to the first policy. For specific implementation of the obtaining unit 502, refer to the related descriptions of S202 in the foregoing method embodiment. Details are not described herein again in this embodiment.

The determining unit 503 is configured to determine a first route set based on the first redirection address, where the first route set includes a first primary route and a first backup route, a next hop of the first primary route is a first device, and a next hop of the first backup route is a second device. For specific implementation of the determining unit 503, refer to the related descriptions of S203 in the foregoing method embodiment. Details are not described herein again in this embodiment.

The sending unit 504 is configured to: send the first packet to the first device when the first primary route works normally, or send the first packet to the second device when the first primary route is faulty.

For specific implementation of the sending unit 504, refer to related descriptions of S204 and S205 in the foregoing method embodiment. Details are not described again in this embodiment.

In a specific implementation, the determining unit 503 is further configured to determine, based on state information of an outbound interface connected to the first service chain forwarding device and the first device, that the first primary route is faulty.

In a specific implementation, the apparatus further includes an updating unit (not shown in the figure).

The obtaining unit 502 is further configured to detect connectivity from the first service chain forwarding device to the first device by using a bidirectional forwarding detection mechanism, to obtain a detection result.

The updating unit is configured to update the state information of the outbound interface based on the detection result.

For specific implementation of the obtaining unit 502 and the updating unit, refer to related descriptions in the foregoing method embodiment. Details are not described herein again in this embodiment.

In a specific implementation, the determining unit 503 is specifically configured to search a routing table by using the first redirection address as a destination address, to obtain the first route set.

In a specific implementation, the first route set is preconfigured.

In a specific implementation, the first device and the second device each are a service function device, and both the first device and the second device are connected to the first service chain forwarding device.

In a specific implementation, the receiving unit 501 is further configured to receive a second packet sent by the first device, where the second packet is obtained by the first device based on the first packet.

The obtaining unit 502 is further configured to: when the second packet matches a second policy, obtain a second redirection address corresponding to the second policy.

The determining unit 503 is further configured to determine a second route set based on the second redirection address, where the second route set includes a second primary route and a second backup route, a next hop of the second primary route is the second device, and a next hop of the second backup route is a third device.

The sending unit 504 is further configured to: send the second packet to the second device when the second primary route works normally, or send the second packet to the third device when the second primary route is faulty.

In a specific implementation, the second device is a service function device, the first device is connected to the first service chain forwarding device, and the second device is connected to the second service chain forwarding device.

In a specific implementation, the sending unit 504 is further configured to send the first packet to the second service chain forwarding device.

In a specific implementation, when the first device is a last hop of a service chain, the second device is a destination network device corresponding to a destination address in the first packet.

In a specific implementation, the next hop of the first backup route is a loopback interface of the second device.

It should be noted that, for implementation of each unit in this embodiment, reference may be made to related descriptions in the foregoing method embodiment. Details are not described herein again in this embodiment.

FIG. 6 is a schematic structural diagram of a network device according to an embodiment of this application. The network device may be, for example, the first service chain forwarding device, the second service chain forwarding device, the first device, the second device, or the third device in the embodiment shown in FIG. 2, or may be device implementation in the packet transmission apparatus 500 in the embodiment shown in FIG. 5.

Refer to FIG. 6. The network device 600 includes a processor 610, a communication interface 620, and a memory 630. There may be one or more processors 610 in a packet forwarding device 600. In FIG. 6, one processor is used as an example. In this embodiment of this application, the processor 610, the communication interface 620, and the memory 630 may be connected by using a bus system or in another manner. In FIG. 6, an example in which the processor 610, the communication interface 620, and the memory 630 are connected by using a bus system 640 is used.

The processor 610 may be a CPU, an NP, or a combination of the CPU and the NP. The processor 610 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

When the network device is the first service chain forwarding device, the processor 610 may perform related functions such as obtaining the first redirection address corresponding to the first policy and determining the first route set based on the first redirection address in the foregoing method embodiment.

The communication interface 620 is configured to receive and send a packet. Specifically, the communication interface 620 may include a receiving interface and a sending interface. The receiving interface may be configured to receive the packet, and the sending interface may be configured to send the packet. There may be one or more communication interfaces 620.

The memory 630 may include a volatile memory (volatile memory), for example, a random-access memory (random-access memory, RAM). The memory 630 may alternatively include a non-volatile memory (non-volatile memory), for example, a flash memory (flash memory), a hard disk drive (hard disk drive, HDD), or a solid-state drive (solid-state drive, SSD). The memory 630 may further include a combination of the foregoing types of memories. The memory 630 may store, for example, the first policy, the first route set, and the like mentioned above.

Optionally, the memory 630 stores an operating system, a program, an executable module, or a data structure, or a subset thereof, or an extended set thereof. The program may include various operation instructions, and is used to implement various operations. The operating system may include various system programs and is used to implement various basic services and process a hardware-based task. The processor 610 may read a program in the memory 630, to implement the packet transmission method provided in embodiments of this application.

The memory 630 may be a storage device in the network device 600, or may be a storage apparatus independent of the network device 600.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of indication, the bus is indicated by using only one bold line in FIG. 6. However, it does not indicate that there is only one bus or only one type of bus.

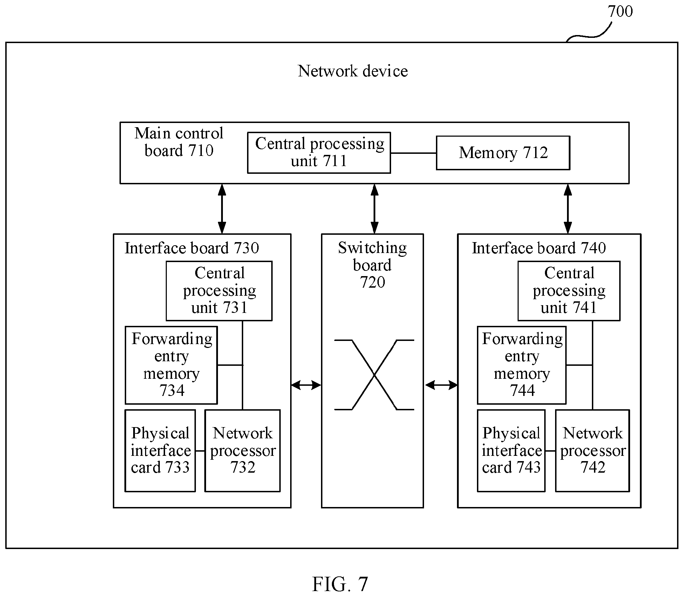

FIG. 7 is a schematic structural diagram of another network device 700 according to an embodiment of this application. The network device 700 may be configured as the first service chain forwarding device and the second service chain forwarding device in the foregoing embodiments, or as device implementation of the packet transmission apparatus 500 in the embodiment shown in FIG. 5.

The network device 700 includes a main control board 710 and an interface board 730.

The main control board 710 is also referred to as a main processing unit (main processing unit, MPU) or a route processor card (route processor card). The main control board 710 controls and manages each component in the network device 700, including functions of route calculation, device management, device maintenance, and protocol processing. The main control board 710 includes a central processing unit 711 and a memory 712.

The interface board 730 is also referred to as a line processing unit (line processing unit, LPU), a line card (line card), or a service board. The interface board 730 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 may be a forwarding chip. Specifically, processing on an uplink packet includes: processing on a packet inbound interface, and forwarding table searching. Processing on a downlink packet includes forwarding table searching.

The physical interface card 733 is configured to implement an interconnection function at a physical layer. Original traffic enters the interface board 730 from the physical interface card 733, and a processed packet is sent from the physical interface card 733. The physical interface card 733 includes at least one physical interface, and the physical interface is also referred to as a physical port. The physical interface card 733, also referred to as a subcard, may be installed on the interface board 730, and is responsible for converting an optical/electrical signal into a packet, performing validity check on the packet, and forwarding the packet to the network processor 732 for processing. In some embodiments, the central processing unit 731 of the interface board 703 may also execute a function of the network processor 732, for example, implement software forwarding based on a general-purpose CPU. Therefore, the network processor 732 is not required in the physical interface card 733.

Optionally, the network device 700 includes a plurality of interface boards. For example, the network device 700 further includes an interface board 740. The interface board 740 includes a central processing unit 741, a network processor 742, a forwarding entry memory 744, and a physical interface card 743.

Optionally, the network device 700 further includes a switching board 720. The switching board 720 may also be referred to as a switch fabric unit (switch fabric unit, SFU). When the network device has a plurality of interface boards 730, the switching board 720 is configured to complete data exchange between the interface boards. For example, the interface board 730 and the interface board 740 may communicate with each other by using the switching board 720.

The main control board 710 and the interface board 730 are coupled. For example, the main control board 710, the interface board 730, the interface board 740, and the switching board 720 are connected to a system backplane through a system bus to implement interworking. In a possible implementation, an inter-process communication protocol (inter-process communication, IPC) channel is established between the main control board 710 and the interface board 730, and communication is performed between the main control board 710 and the interface board 730 through the IPC channel.

Logically, the network device 700 includes a control plane and a forwarding plane. The control plane includes the main control board 710 and the central processing unit 731, and the forwarding plane includes components that perform forwarding, for example, the forwarding entry memory 734, the physical interface card 733, and the network processor 732. The control plane performs functions such as routing, generating a forwarding table, processing signaling and a protocol packet, and configuring and maintaining a device state. The control plane delivers the generated forwarding table to the forwarding plane. On the forwarding plane, the network processor 732 forwards, through table searching and based on the forwarding table delivered by the control plane, a packet received by the physical interface card 733. The forwarding table delivered by the control plane may be stored in the forwarding entry memory 734. In some embodiments, the control plane and the forwarding plane may be completely separated, and are not on a same device.

If the network device 700 is configured as a first service chain forwarding network device, the central processing unit 711 may obtain a first redirection address, and determine a first route set based on the first redirection address. The network processor 732 may trigger the physical interface card 733 to send a first packet to a first device or a second device based on the determined first route set.

It should be understood that the receiving unit 501, the sending unit 504, and the like in the packet transmission apparatus 500 may be equivalent to the physical interface card 733 or the physical interface card 743 in the network device 700. The obtaining unit 502, the determining unit 504, and the like in the packet transmission apparatus 500 may be equivalent to the central processing unit 711 or the central processing unit 731 in the network device 700.

It should be understood that an operation on the interface board 740 in this embodiment of this application is the same as an operation on the interface board 730. For brevity, details are not described again. It should be understood that the network device 700 in this embodiment may correspond to a first network device or a second network device in the foregoing method embodiments. The main control board 710, the interface board 730, and/or the interface board 740 in the network device 700 may implement functions that the first service chain forwarding device or the second service chain forwarding device have and/or various steps implemented by the first service chain forwarding device or the second service chain forwarding device in the foregoing method embodiments. For brevity, details are not described herein again.

It should be understood that there may be one or more main control boards, and when there are a plurality of main control boards, a primary main control board and a backup main control board may be included. There may be one or more interface boards, and a network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than a data access and processing capability of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. A specific architecture to be used depends on a networking deployment scenario.

In some possible embodiments, the first service chain forwarding device or the second service chain forwarding device may be implemented as a virtualization device. For example, the virtualization device may be a virtual machine (Virtual Machine, VM) that runs a program having a function of sending a packet, and the virtual machine is deployed on a hardware device (for example, a physical server). The virtual machine is a complete computer system simulated by software, having complete hardware system functions, and running in a completely isolated environment. The virtual machine may be configured as the first service chain forwarding device or the second service chain forwarding device. For example, the first service chain forwarding device or the second service chain forwarding device may be implemented based on a general-purpose physical server in combination with a network functions virtualization (network functions virtualization, NFV) technology. The first service chain forwarding device or the second service chain forwarding device is a virtual host, a virtual router, or a virtual switch. Persons skilled in the art may virtualize, on the general-purpose physical server by reading this application with reference to the NFV technology, the first service chain forwarding device or the second service chain forwarding device that has the foregoing function, and details are not described herein.

It should be understood that the network devices in the foregoing product forms have any function of the first service chain forwarding device or the second service chain forwarding device in the foregoing method embodiments, and details are not described herein again.

An embodiment of this application further provides a chip, including a processor and an interface circuit. The interface circuit is configured to receive instructions and transmit the instructions to the processor. The processor may be, for example, a specific implementation form of the packet transmission apparatus 500 shown in FIG. 5, and may be configured to perform the foregoing packet transmission method. The processor is coupled to a memory, the memory is configured to store a program or instructions, and when the program or the instructions is/are executed by the processor, the chip system is enabled to implement the method in any one of the foregoing method embodiments.

Optionally, there may be one or more processors in the chip system. The processor may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated on a same chip, or may be separately disposed on different chips. A type of the memory and a manner of setting the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), or a programmable controller (programmable logic device, PLD) or another integrated chip.

An embodiment of this application further provides a computer-readable storage medium, including instructions or a computer program. When the instructions or the computer program are/is run on a computer, the computer is enabled to perform the packet transmission method provided in the foregoing embodiment.

An embodiment of this application further provides a computer program product including instructions or a computer program. When the computer program product runs on a computer, the computer is enabled to perform the packet transmission method provided in the foregoing embodiment.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in proper circumstances so that embodiments described herein can be implemented in other orders than the order illustrated or described herein. In addition, terms "include" and "have" and any other variants are intended to cover the non-exclusive inclusion. For example, a process, method, system, product, or device including a list of steps or units is not necessarily limited to those expressly listed steps or units, but may include other steps or units not expressly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, unit division is merely logical service division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate parts may or may not be physically separate, and the parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

If the integrated unit is implemented in the form of the software service unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. Persons skilled in the art should be aware that, in the foregoing one or more examples, the services described in the present invention may be implemented by hardware, software, firmware, or any combination thereof. When the services are implemented by the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A packet transmission method, wherein the method comprises:
receiving, by a first service chain forwarding device, a first packet;
when the first packet matches a first policy, obtaining, by the first service chain forwarding device, a first redirection address corresponding to the first policy;
determining, by the first service chain forwarding device, a first route set based on the first redirection address, wherein the first route set comprises a first primary route and a first backup route, a next hop of the first primary route is a first device, and a next hop of the first backup route is a second device; and
sending, by the first service chain forwarding device, the first packet to the first device when the first primary route works normally; or
sending, by the first service chain forwarding device, the first packet to the second device when the first primary route is faulty.

2. The method according to claim 1, wherein the method further comprises:
determining, by the first service chain forwarding device based on state information of an outbound interface connected to the first service chain forwarding device and the first device, that the first primary route is faulty.

3. The method according to claim 2, wherein the method further comprises:
detecting, by the first service chain forwarding device, connectivity from the first service chain forwarding device to the first device by using a bidirectional forwarding detection mechanism, to obtain a detection result; and
updating, by the first service chain forwarding device, the state information of the outbound interface based on the detection result.

4. The method according to any one of claims 1 to 3, wherein the determining, by the first service chain forwarding device, a first route set based on the first redirection address comprises:
searching, by the first service chain forwarding device, a routing table by using the first redirection address as a destination address, to obtain the first route set.

5. The method according to claim 4, wherein the first route set is preconfigured.

6. The method according to any one of claims 1 to 5, wherein the first device and the second device each are a service function device, and both the first device and the second device are connected to the first service chain forwarding device.

7. The method according to claim 6, wherein after the sending, by the first service chain forwarding device, the first packet to the first device, the method further comprises:
receiving, by the first service chain forwarding device, a second packet sent by the first device, wherein the second packet is obtained by the first device based on the first packet;
when the second packet matches a second policy, obtaining, by the first service chain forwarding device, a second redirection address corresponding to the second policy;
determining, by the first service chain forwarding device, a second route set based on the second redirection address, wherein the second route set comprises a second primary route and a second backup route, a next hop of the second primary route is the second device, and a next hop of the second backup route is a third device; and
sending, by the first service chain forwarding device, the second packet to the second device when the second primary route works normally; or
sending, by the first service chain forwarding device, the second packet to the third device when the second primary route is faulty.

8. The method according to any one of claims 1 to 5, wherein the second device is a service function device, the first device is connected to the first service chain forwarding device, and the second device is connected to a second service chain forwarding device.

9. The method according to claim 8, wherein the sending, by the first service chain forwarding device, the first packet to the second device when the first primary route is faulty comprises:
sending, by the first service chain forwarding device, the first packet to the second service chain forwarding device.

10. The method according to any one of claims 1 to 5, wherein when the first device is a last hop of a service chain, the second device is a destination network device corresponding to a destination address in the first packet.

11. The method according to claim 10, wherein the next hop of the first backup route is a loopback interface of the second device.

12. A packet transmission apparatus, applied to a first service chain forwarding device, wherein the apparatus comprises:
a receiving unit, configured to receive a first packet;
an obtaining unit, configured to: when the first packet matches a first policy, obtain a first redirection address corresponding to the first policy;
a determining unit, configured to determine a first route set based on the first redirection address, wherein the first route set comprises a first primary route and a first backup route, a next hop of the first primary route is a first device, and a next hop of the first backup route is a second device; and
a sending unit, configured to: send the first packet to the first device when the first primary route works normally, or send the first packet to the second device when the first primary route is faulty.

13. The apparatus according to claim 12, wherein the determining unit is further configured to determine, based on state information of an outbound interface connected to the first service chain forwarding device and the first device, that the first primary route is faulty.

14. The apparatus according to claim 13, wherein the apparatus further comprises an updating unit, wherein
the obtaining unit is further configured to detect connectivity from the first service chain forwarding device to the first device by using a bidirectional forwarding detection mechanism, to obtain a detection result; and
the updating unit is configured to update the state information of the outbound interface based on the detection result.

15. The apparatus according to any one of claims 12 to 14, wherein the determining unit is specifically configured to search a routing table by using the first redirection address as a destination address, to obtain the first route set.

16. The apparatus according to claim 15, wherein the first route set is preconfigured.

17. The apparatus according to any one of claims 12 to 16, wherein the first device and the second device each are a service function device, and both the first device and the second device are connected to the first service chain forwarding device.

18. The apparatus according to claim 17, wherein
the receiving unit is further configured to receive a second packet sent by the first device, wherein the second packet is obtained by the first device based on the first packet;
the obtaining unit is further configured to: when the second packet matches a second policy, obtain a second redirection address corresponding to the second policy;
the determining unit is further configured to determine a second route set based on the second redirection address, wherein the second route set comprises a second primary route and a second backup route, a next hop of the second primary route is the second device, and a next hop of the second backup route is a third device; and
the sending unit is further configured to: send the second packet to the second device when the second primary route works normally, or send the second packet to the third device when the second primary route is faulty.

19. The apparatus according to any one of claims 12 to 16, wherein the second device is a service function device, the first device is connected to the first service chain forwarding device, and the second device is connected to a second service chain forwarding device.

20. The apparatus according to claim 19, wherein the sending unit is further configured to send the first packet to the second service chain forwarding device.

21. The apparatus according to any one of claims 12 to 16, wherein when the first device is a last hop of a service chain, the second device is a destination network device corresponding to a destination address in the first packet.

22. The apparatus according to claim 21, wherein the next hop of the first backup route is a loopback interface of the second device.

23. A communication device, wherein the device comprises a processor and a memory, wherein
the memory is configured to store instructions or a computer program; and
the processor is configured to execute the instructions or the computer program in the memory, to enable the communication device to perform the method according to any one of claims 1 to 11.

24. A computer-readable storage medium, comprising instructions, wherein when the instructions are run on a computer, the computer is enabled to perform the method according to any one of claims 1 to 11
